Europäisches Patentamt

European Patent Office

Office européen des brevets

(19)

(11) **EP 1 283 626 A1**

(12) **EUROPEAN PATENT APPLICATION**

(43) Date of publication:
**12.02.2003 Bulletin 2003/07**

(51) Int Cl.$^7$: **H04L 25/02**, G06F 13/42

(21) Application number: **01410100.0**

(22) Date of filing: **09.08.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Hewlett-Packard Company (a Delaware corporation)**
**Palo Alto, CA 94304 (US)**

(72) Inventor: **Moenne-Loccoz, Philippe**
**38100 Grenoble (FR)**

(74) Representative: **Lloyd, Richard Graham**
**Intellectual Property Section,**
**Legal Department,**
**HEWLETT-PACKARD FRANCE,**
**Etablissement de Grenoble**
**38053 Grenoble Cedex 9 (FR)**

(54) **Enhanced synchronous data transfer system**

(57)     A method is disclosed whereby data throughput in a bus is enhanced. The method includes the steps of:

- monitoring the data level of data symbols prior to the symbols being transmitted over said bus;

- if the data level of consecutive symbols is substantially identical, reducing the time between transmitting the second symbol and the end of the first thereby reducing the transmission time, and thus increasing the data throughput, for data transmitted over the bus. The method may be used with any suitable synchronous bus systems including parallel and serial systems.

Figure 4

Printed by Jouve, 75001 PARIS (FR)

**Description**

**Technical Field**

The present invention relates to methods and apparatus for improving data transfer rates in data buses. More particularly, although not exclusively, the present invention relates to methods and apparatus for increasing the data transfer rate in synchronous data buses. By way of example, the invention may be applied in data communication systems incorporating synchronous buses.

**Background Art**

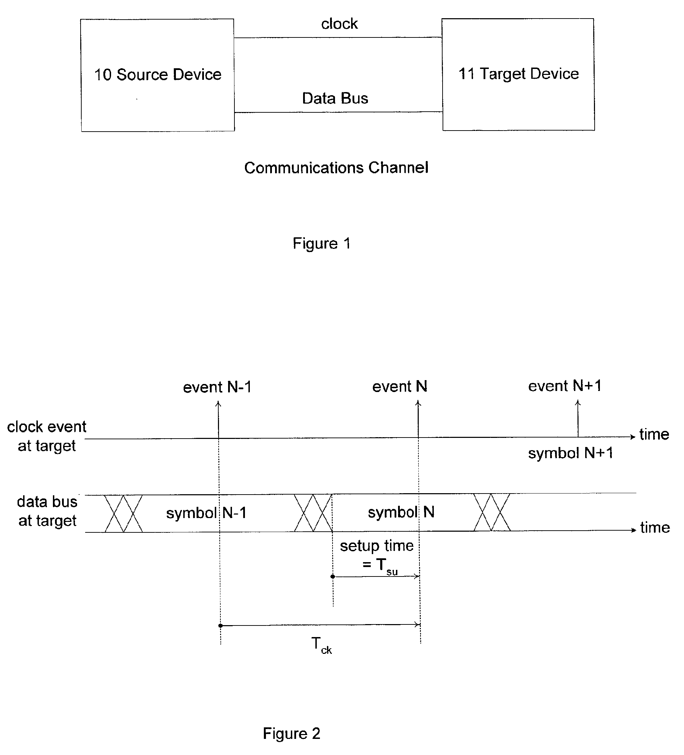

A synchronous bus architecture can be generalized to a source device 10 and a target device 11 (see Figure 1) connected by at least two physical and/or logical data paths. The first path provides a clock signal and the second the data path. When the two devices exchange data, the receiving device needs to know when each bit can be read or sampled on the bus. This requires that the transmitter and receiver remain in synchronization. Such systems may include addressing paradigms, for example such as that implemented in the $I^2C$ bus. However, the use of addressing or other data embedded in the signal train is, in general, not material to the operation of the invention and will therefore not be discussed in detail.

Data buses such as SPI, $I^2C$ and Microwire achieve this by transmitting a clock signal on a separate signal line. According to this technique, data is clocked out of the bus by means of periodic transitions on the clock signal line. The transitions occur essentially simultaneously at the transmitter and receiver thus allowing the receiver to sample the data off the bus in synchronization. The sampling time, as referred to in this specification corresponds to the time between successive measurements of the data at the receivers input as clocked by the transmitter clock. In the case of the RS-232 interface, the receiver and transmitter each incorporates a separate clock reference with the same frequency, each of which must remain in synchronization with the other. To achieve this, each transmitted word starts with a transition (idle to start bit). The receiver synchronizes its own clock to this single transition and then uses its timing circuitry and a knowledge of the buses fixed bit-rate to read each bit in the predetermined center of the each bit period. A stop bit returns the link to the idle state to the next start bit can be detected.

The USB uses an encoding format called non-return to zero inverted (NZRI) with bit-stuffing. NZRI uses no start/stop bits or separate clock line. The USB uses bit-stuffing and synchronization fields to remain in synchronization. Each packet begins with a synchronization field to enable the receiving device to align or synchronization its clock to the transmitted data.

As the present invention operates by analyzing the characteristics of consecutive or adjacent symbols in the data stream, synchronous data transmission techniques such as RS-232 and the USB are considered less suitable for use with the invention.

As with any periodic or aperiodic data transfer technique, bandwidth may be limited by a number of factors. These include the demands placed on the available bandwidth by the peripheral devices vying for throughput as well as noise and voltage fluctuations on the physical data line leading to excessive frame transmission retries a assuming that some error correction mechanism is present. If no error correction is implemented the data will be corrupted. More fundamentally, the bandwidth is limited by the basic timing resolution and clock rate of the data bus architecture itself. It is this latter aspect with which the present invention is concerned.

Pulse timing incorporates a number of hard-wired limitations including sampling time, pulse-width and setup time. The selection of these parameters is usually governed by environmental constraints such as noise, hardware limitations, clock speed, clock accuracy and the required sampling resolution. Such parameters are also generally fixed and, given a specified architecture, unable to be varied in response to transitory data transfer conditions. To this end, one of the factors in the transmission of synchronous data is the need for a non-zero setup time. The setup time corresponds to the minimum length of time that a data signal must be available and stable at an input of a flip-flop before a leading edge of clock pulse is applied. If the clock pulse is applied too soon after the data signal, the setup time will be violated and the flip-flop will not predictably produce the desired output, i.e. a signal having the same logic state as the data input signal. Thus, for a receiver clocked by a transmitter clock signal, it must sample the incoming data on the bus at a rate which satisfies the setup time constraints while still providing the desired data transmissions throughput. The present invention seeks to increase the data transmission rate while satisfying this requirement and it is the object of the invention to provide a method and apparatus for enhancing the data transfer speed in a synchronous bus and which overcomes or at lease ameliorates a number of the abovementioned problems.

**Disclosure of the Invention**

In one aspect the invention provides for a method of enhancing data throughput in a bus, the method including the steps of:

- monitoring the data level of data symbols prior to the symbols being transmitted over said bus;

- if the data level of consecutive symbols is substantially identical, reducing the time between sampling the second symbol and the first thereby reducing the transmission time, and thus increasing the data throughput, for data transmitted over the bus.

In a preferred embodiment, the sampling time may be reduced by a fixed factor. Alternatively, the sampling time may be varied continuously.
In another preferred embodiment, the sampling time may reduced to close to zero where consecutive data symbols are substantially identical.
The comparison between consecutive data symbols may be made on the basis of analyzing the voltages of consecutive signals representing the consecutive symbols and reducing the setup time so that the sampling time is set to a minimum, other predetermined or variable value, while taking into account noise and stability of the signal.
The invention further provides for a bus monitoring circuit adapted to increase the data throughput on the bus, the circuit including:

a. monitoring means adapted to monitor data symbols being transmitted by a transmitter;

b. clock output means adapted to control when a receiver samples signals on the bus;

c. comparison means adapted to compare consecutive data symbols being transmitted on the bus; wherein the comparison means controls the clock output means so as to increase the sampling rate at the receiver when two or more consecutive substantially identical data symbols are detected thereby increasing the data throughput of the bus.

The invention further provides a method of operating a bus control transmission circuit comprising the steps of:

d. monitoring an output data stream in order to detect consecutive substantially identical data symbols;

e. where consecutive substantially identical data symbols are detected, providing a modified clock output adapted to provide a signal representing the rate at which the data can be sampled without violating setup time constraints.

The invention further provides for a method of operating a bus control receiver circuit including the steps of:

f. monitoring an incoming data stream at an input to the receiver circuit;

g. monitoring a clock signal, said clock signal adapted to vary depending on whether consecutive data symbols are substantially identical and in cases where said symbols are substantially identical, sampling the input signal at a rate controlled by the clock signal in such a way as to increase data throughput.

In a further aspect, the invention provides for a bus control transmitter circuit adapted to operate in accordance with the method as hereinbefore defined.
In yet a further aspect, the invention provides for a bus control receiver circuit adapted to operate in accordance with the method as hereinbefore defined.

**Brief Description of the Drawings**

The present invention will now be described by way of example only and with reference to the drawings in which:

Figure 1:    illustrates a simplified schematic of a data bus;

Figure 2:    illustrates a prior art timing sequence;

Figure 3:    illustrates a timing sequence showing the effect of reducing the sampling time;

Figure 4:    illustrates a simplified schematic of a bus interface for varying the clock event separation (sampling time).

**Best Mode for Carrying Out the Invention**

Figure 1 illustrates a highly simplified schematic of a generalized data communications bus is shown. A source device 10 communicates with a target device 11 via a communications channel. For simplicity, in the description of this embodiment we will consider the example of a generalized serial data bus architecture having a separate clock line.
Figure 2 illustrates a prior art data transmission serial architecture timing diagram appropriate for such a serial bus. Referring to figure 2, a stream of consecutive symbols denoted N(...N-1, N, N+1...) are transmitted on the data bus. The symbols are pulses having specified voltage levels corresponding to the coded data. Various data coding paradigms are known to those skilled in the relevant technical field and for brevity will therefore not be discussed in detail herein.
The hatched area located between adjacent symbols N-1, N and N+1 represents the transition region and may correspond to an inter-symbol voltage fluctuation. Each symbol N maps to a clock pulse transmitted on the clock line, the clock events being denoted event N-1, event N, event N+1 etc. As pulse train is clocked out of the transmitter, the clock output triggers the sampling of the output at the target device. Thus the time between samples corresponds to the separation between the clock pulses N, N+1 etc.
The time between adjacent symbols is denoted by $T_{ck}$ and in the present example corresponds to the time separation between the centers of adjacent symbols. This time is usually constant and does not depend on the symbol.
The bandwidth of such a system is given by:

$$BW = \left(\frac{1}{T_{ck}}\right) \cdot \text{numbers of bits per symbol}$$

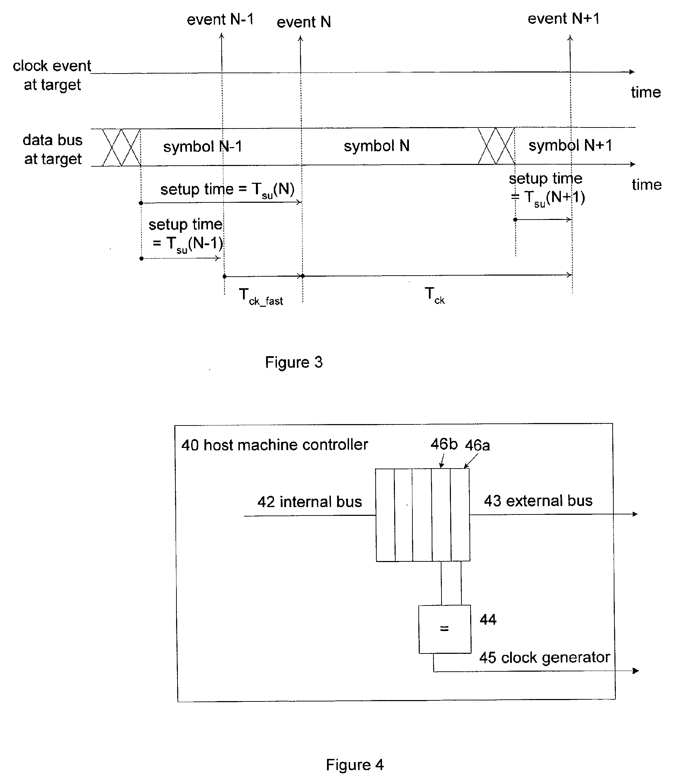

The minimum allowable value for $T_{ck}$ is a function of the electrical characteristics of the source, the target and the communication channel. Such characteristics may include noise levels and other environmental factors. As noted above, one important factor is the setup time $T_{su}$. This is the minimum time the data must be stable before the next clock event to ensure that the data is correctly sampled by the target device. If the target data bus reads the data on the communications channel before the required time, i.e., if the clock event N is moved to sufficiently to the left, the data will be corrupted. Thus any variation is sampling time must only occur in the context of satisfying the setup time constraints.
According to an embodiment of the present invention, the period between clock pulses, and thus the sampling time, is varied depending on the characteristics of adjacent symbols N-1 and N.
More particularly, in an exemplary embodiment of the invention, the sampling time $T_{ck}$ may be varied as follows. Where adjacent symbols N-1 and N are substantially identical, the setup time $T_{ck}$ is reduced, preferably to near zero or substantially zero depending on the sampling timing limits. Here, substantial identity between adjacent symbols corresponds to consecutive symbols being within the voltage resolution of the communication channel hardware or other predetermined voltage tolerance. This situation is illustrated in figure 3.
Referring to figure 3, consecutive symbols are substantially identical. In this case, the sampling time can be reduced to $T_{ck\_fast}$ where the lower limit to $T_{ck\_fast}$ ideally approaches zero. If $T_{ck}(N) \rightarrow 0$ the time between clock event N-1 and event N can be reduced to $T_{ck\_fast}$ where:

$$T_{ck\_fast} = \alpha \cdot T_{ck}$$

where $0 \leq \alpha \leq 1$. Thus, if $S$ = the number of symbols to be transferred and $I$ = the number of substantially identical symbols in the $S$ symbols, then the average fast bandwidth $BW_{fast}$ is:

$$BW = \left(\frac{1}{T_{ck}}\right) \cdot \text{numbers of bits per symbol} \cdot \frac{1}{1-\left(\dfrac{I}{S(1-\alpha)}\right)}$$

By way of example, if $\alpha$ = 0.5, $I/S$ = 0.5, then the bandwidth is multiplied by a factor 1.33 corresponding to an increase of 30%. Thus it can be seen that the present invention potentially provides a significant enhancement in bandwidth depending on the frequency and number of identical consecutive symbols on the bus.

The present invention may be applied to a variety of synchronous bus architectures. In particular and by way of detailed and exemplary embodiment, an example will be described herein in the form of the I$^2$C bus. It is to be understood that the invention may, with suitable modification, be adapted to other types of bus architecture including those mentioned above.

The I$^2$C bus physically comprises a two-wire bi-directional connection. The first line corresponds to a Serial Data (SDA) line and the second to a Serial Clock (SCL) line. A ground wire is included, but will not be discussed as it is not material to the operation of the invention. As an aside, the I$^2$C bus is particularly useful in that a plurality of devices can be connected to the bus where each device is identified by a unique address whether it is a CPU, LCD driver, memory or other type of chip. Each of these chips (or functional devices) can act as a receiver and/or transmitter depending on its function. The Bus Master is a chip that controls the bus. This is the chip that initiates data transfer on the bus. The others are regarded as Bus Slaves.

The operation of the I$^2$C bus is briefly as follows. When the CPU wants to initiate data transfer on the bus, it issues a START condition. This notifies all of the chips on the bus that data transmission is about to occur. The CPU then transmits the address of the device that it wants to connect to. All the chips on the bus will compare this address with their address and ignore any bus transmission that is not identified by that address. The chip matching the address produces an ACKNOWLEDGE signal on the CPU. When the corresponding chip sees the ACKNOWLEDGE signal, it pulls the data line LOW. This notifies the CPU that there is a chip on the bus with the desired address. Once this has occurred the CPU can start transmitting or receiving data. Data is clocked out of the transmitting device by the clock signal appearing on the serial clock line. As noted in the discussion above, the data on the SDA line must be stable during the HIGH period of the clock. The HIGH or LOW state of the data line can only change when the clock signal on the SCL line is LOW. Data transitions are only possible when between clock pulses and thus bit-by-bit arbitration is effected using the defined clock on the SCL line. According to the present invention, if consecutive data symbols clocked on the SDA line are substantially identical, the time between clock pulses on the SCL line and the rate at which they are sampled is reduced. This eliminates the redundant settling time, while still satisfying the setup time constraints, and allows the data to be clocked (i.e.; transmitted) on the bus at a faster rate.

The invention may be implemented using additional hardware which monitors the state of adjacent or consecutive data symbols on the SDA line. This may be implemented using a FIFO arrangement whereby consecutive bytes are compared using a comparator 44 (see figure 4). The data stream is fed into a FIFO buffer 46 by way of an internal bus and clocked out on the SDA line by a clock generator that is controlled by a control circuit 45. When the system detects identical consecutive data symbols, the clock control circuit causes the clock pulse separation to be reduced. Thus the sampling time can be varied in direct response to the characteristics of consecutive data symbols. The circuit illustrated schematically in figure 4 may be incorporated, for example, in an I$^2$C bus interface either by way of discrete circuitry or fabricated on an integrated circuit along with the I$^2$C interface circuitry. Alternatively the method may be implemented in software. It is also envisaged that the invention may be applied to a bus having more than one data signal path. In such a case, the sampling may be varied when consecutive substantially identical words are present on the bus output.

The present invention can be used to provide a significant increase in the bandwidth exhibited by a synchronous bus whereby the precise degree of improvement will depend on the characteristics of the data stream. However, the variability of the clock control can be affected in direct response to the presence of consecutive identical data symbols with the system resetting back to the default clock rate where necessary. Although the present example has been described with reference to an example whereby the sampling time has been reduced to zero, this is not to be considered as a limiting example. Other sampling time reduction ratios are possible and the precise value may depend on the characteristics of the data stream, the desired reliability and the anticipated susceptibility to noise inherent in the bus.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

**Claims**

**1.** A method of controlling data on a synchronous bus, the method including the steps of:

- monitoring the data level of data symbols prior to the symbols being transmitted over said bus;

- if the data level of consecutive symbols is substantially identical, reducing the time between sampling said consecutive symbols thereby reducing the transmission time for data transmitted over the bus.

2. A method as claimed in claim 1 wherein the sampling time is reduced by a fixed factor.

3. A method as claimed in claim 1 wherein the sampling time is reduced by a variable factor.

4. A method as claimed in claim 1 wherein the sampling time is reduced to substantially zero in cases where consecutive data symbols are substantially identical.

5. A method as claimed in claim 1 wherein the comparison between consecutive data symbols is made on the basis of analyzing the voltages of consecutive signals representing consecutive symbols and reducing the sampling time to a minimum while taking into account the required quality of the signal.

6. A method as claimed in claim 1 wherein the bus connects at least one transmitter and at least one receiver, and the reduction in the sampling time is effected by varying a clock signal emitted by the transmitter and wherein the clock signal is adapted to control the sample rate of the receiver.

7. A bus monitoring circuit including:

   a. monitoring means adapted to monitor data symbols being transmitted by a transmitter;

   b. clock output means adapted to control when a receiver samples signals on the bus;

   c. comparison means adapted to compare consecutive data symbols being transmitted on the bus; wherein the comparison means controls the clock output means so as to increase the sampling rate at the receiver when two or more consecutive substantially identical data symbols are detected.

8. A bus monitoring circuit as claimed in claim 7 wherein the transmitter includes a FIFO buffer which stores the data symbols prior to transmission.

9. A bus monitoring circuit as claimed in claim 8 wherein a comparator is configured with the FIFO buffer in such a way as to monitor consecutive data symbols in the output data stream.

10. A bus monitoring circuit as claimed in claim 9 wherein the comparator controls the clock output so as to shorten the time between sampling the input at the receiver when two or more consecutive data symbols are substantially identical.

11. A method of operating a bus control transmission circuit comprising the steps of:

    a. monitoring an output data stream in order to detect consecutive substantially identical data symbols;
    b. where consecutive substantially identical data symbols are detected, providing a modified clock output adapted to provide a signal representing the rate at which the data can be sampled without violating constraints governed by the required quality of the signal.

12. A method of operating a bus control transmission circuit as claimed in claim 11 wherein the sampling rate is reduced without violating setup time constraints.

13. A method of operating a bus control receiver circuit including the steps of:

    a. monitoring an incoming data stream at an input to the receiver circuit;

    b. monitoring a clock signal, said clock signal adapted to vary depending on whether consecutive data symbols are substantially identical and in cases where said symbols are substantially identical, sampling the input signal at a rate controlled by the clock signal in such a way as to increase data throughput.

**14.** A bus control transmitter circuit adapted to operate in accordance with the method of claim 11.

**15.** A bus control receiver circuit adapted to operate in accordance with the method of claim 13.

**16.** A synchronous bus adapted to operate in accordance with the method of any one of claims 1 to 6.

clock

10 Source Device
11 Target Device

Data Bus

Communications Channel

Figure 1

event N-1    event N    event N+1

clock event
at target
time

symbol N+1

data bus
at target

symbol N-1    symbol N

setup time
= $T_{su}$

$T_{ck}$

Figure 2

event N-1   event N                                event N+1

clock event
at target                                                                    time

data bus
at target         symbol N-1        symbol N        symbol N+1
                                                                              time

setup time = $T_{su}(N)$                          setup time
                                                  = $T_{su}(N+1)$
setup time
= $T_{su}(N-1)$

$T_{ck\_fast}$                    $T_{ck}$

Figure 3

40 host machine controller              46b  46a

42 internal bus                          43 external bus

                                        =    44

                                        45 clock generator

Figure 4

**European Patent Office**

**EUROPEAN SEARCH REPORT**

Application Number

EP 01 41 0100

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 940 758 A (FUJITSU LTD) 8 September 1999 (1999-09-08) * paragraph '0011! - paragraph '0024! * | 1-16 | H04L25/02 G06F13/42 |
| A | PATENT ABSTRACTS OF JAPAN vol. 012, no. 313 (P-749), 25 August 1988 (1988-08-25) & JP 63 081556 A (HITACHI LTD), 12 April 1988 (1988-04-12) * abstract * | 1-16 | |
| A | US 5 470 210 A (LARSEN HANS K) 28 November 1995 (1995-11-28) * abstract * | 1-16 | |
| A | WO 99 48260 A (EJAZ UL HAQ ;JAZIO INC (US)) 23 September 1999 (1999-09-23) * abstract * * page 4, line 22 - line 12 * | 1-16 | |

TECHNICAL FIELDS SEARCHED (Int.Cl.7)

H04L
G06F

The present search report has been drawn up for all claims

| Place of search | Date of completion of the search | Examiner |
|---|---|---|
| THE HAGUE | 23 January 2002 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 283 626 A1**

**ANNEX TO THE EUROPEAN SEARCH REPORT
ON EUROPEAN PATENT APPLICATION NO.**

EP 01 41 0100

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2002

| Patent document cited in search report | | | Publication date | Patent family member(s) | | Publication date |
|---|---|---|---|---|---|---|
| EP 0940758 | A | | 08-09-1999 | JP 11250006 A | | 17-09-1999 |
| | | | | CN 1227933 A | | 08-09-1999 |
| | | | | EP 0940758 A2 | | 08-09-1999 |
| | | | | US 6140850 A | | 31-10-2000 |
| JP 63081556 | A | | 12-04-1988 | NONE | | |
| US 5470210 | A | | 28-11-1995 | EP 0606504 A1 | | 20-07-1994 |
| | | | | AU 5258493 A | | 14-07-1994 |
| | | | | CA 2112840 A1 | | 10-07-1994 |
| | | | | FI 940047 A | | 10-07-1994 |
| | | | | JP 6235382 A | | 23-08-1994 |
| | | | | NO 940069 A | | 11-07-1994 |
| WO 9948260 | A | | 23-09-1999 | US 6160423 A | | 12-12-2000 |
| | | | | US 6151648 A | | 21-11-2000 |
| | | | | AU 2992699 A | | 11-10-1999 |
| | | | | BR 9908836 A | | 21-11-2000 |
| | | | | CN 1297638 T | | 30-05-2001 |
| | | | | EP 1064767 A1 | | 03-01-2001 |
| | | | | GB 2352375 A | | 24-01-2001 |
| | | | | PL 343258 A1 | | 30-07-2001 |
| | | | | TR 200002649 T2 | | 21-11-2000 |
| | | | | WO 9948260 A1 | | 23-09-1999 |
| | | | | US 6255859 B1 | | 03-07-2001 |
| | | | | US 6327205 B1 | | 04-12-2001 |
| | | | | US 2001020853 A1 | | 13-09-2001 |

EPO FORM P0459

For more details about this annex : see Official Journal of the European Patent Office, No. 12/82

11